# EUROPÄISCHE PATENTSCHRIFT

(11) **EP 3 542 447 B1**
(45) Veröffentlichungstag und Bekanntmachung des Hinweises auf die Patenterteilung: **31.03.2021**
(21) Anmeldenummer: 17800753.0
(22) Anmeldetag: 06.11.2017
(51) Int. Cl.: H02K 3/50, H02K 5/22, H02K 15/00, H02K 1/16

(54) **VORRICHTUNG ZUR VERSCHALTUNG DER VERDRAHTUNG EINES STATORS EINER ELEKTRISCHEN MASCHINE, STATOR EINER ELEKTRISCHEN MASCHINE UND VERFAHREN ZUR VERSCHALTUNG DER VERDRAHTUNG EINES STATORS EINER ELEKTRISCHEN MASCHINE**
DEVICE FOR CONNECTION OF STATOR WIRING OF AN ELECTRIC MACHINE, STATOR OF AN ELECTRIC MACHINE AND METHOD OF CONNECTION OF STATOR WIRING OF AN ELECTRIC MACHINE
DISPOSITIF POUR CONNEXION D'UN CÂBLAGE D'UN STATOR D'UNE MACHINE ÉLECTRIQUE, STATOR D'UNE MACHINE ÉLECTRIQUE ET PROCÉDÉ DE CONNEXION D'UN CÂBLAGE D'UN STATOR D'UNE MACHINE ÉLECTRIQUE

(30) Priorität: 17.11.2016 DE 102016222611
(43) Veröffentlichungstag der Anmeldung: 25.09.2019
(73) Patentinhaber: Volkswagen Aktiengesellschaft, 38440 Wolfsburg (DE)
(72) Erfinder: FIPPL, Mike, 34225 Baunatal (DE); WIST, Alex, 34225 Baunatal (DE); BARTHOLMAI, Dirk, 34326 Morschen (DE); GÖBEL, Martin, 34305 Niedenstein (DE); HORN, Nadine, 34621 Frielendorf (DE)
(86) Internationale Anmeldenummer: PCT/EP2017/078317
(87) Internationale Veröffentlichungsnummer: WO 2018/091295

(56) Entgegenhaltungen:
- EP-A2- 0 751 609
- WO-A2-2005/020408
- CN-A- 104 113 149
- CN-U- 203 456 955

## Beschreibung

Die Erfindung betrifft eine Vorrichtung zur Verschaltung der Verdrahtung eines Stators einer elektrischen Maschine. Ferner betrifft die Erfindung einen Stator einer elektrischen Maschine sowie ein Verfahren zur Verschaltung der Verdrahtung eines Stators einer elektrischen Maschine.

### Stand der Technik

Die Verschaltung der Verdrahtung eines Stators einer elektrischen Maschine muss in der Regel auf kleinstem Bauraum erfolgen. Hierfür sind aus dem Stand der Technik verschiedene Konzepte bekannt. Bei einem Stator mit einer als Wellenwicklung ausgebildeten Verdrahtung müssen zudem einzelne elektrische Leiter zusammengeführt, verschaltet und zu den drei Hauptphasen einer Dreiphasenwechselstromquelle geführt werden.

Insbesondere die Schritte des Zusammenführens und Verschaltens der Verdrahtung, das heißt die Herstellung einer elektrischen Verbindung zwischen den elektrischen Leitern der Verdrahtung, ist dabei insbesondere bei einer Wellenwicklung aufwändig und im Allgemeinen nicht prozesssicher durchführbar, da die für das Verschalten notwendige relative Positionierung der elektrischen Leiter weitere fehleranfällige Arbeitsschritte benötigt.

Die DE 10 2014 214 909 A1 offenbart eine Anordnung zum Aufnehmen einer Verdrahtung einer elektrischen Maschine, umfassend einen zum Positionieren entlang eines Umfangs der elektrischen Maschine ausgebildeten Grundkörper, der ausgebildet ist mit wenigstens einem Leitungsführungsraum zum gemeinsamen Aufnehmen aus der elektrischen Maschine herausgeführter Anschlüsse sowie mit wenigstens einem Verschaltungsraum, der zum Aufnehmen je eines eine elektrische Verbindung wenigstens zweier der Anschlüsse bildenden Verbindungselementes je eine Anzahl gegeneinander elektrisch isolierter Aufnahmekammern aufweist, wobei der wenigstens eine Leitungsführungsraum und der wenigstens eine Verschaltungsraum in Umfangsrichtung der elektrischen Maschine einander wechselweise benachbart angeordnet sind.

Aus der US 2002/0043883 A1 ist eine Drahtverbindungsvorrichtung bekannt, welche eine im Wesentlichen in Form eines quadratischen Zylinders ausgebildete Anschlussbox umfasst, wobei die Anschlussbox einen Öffnungsabschnitt aufweist, welcher in einer radialen nach außen weisenden Richtung eines im Wesentlichen zylindrischen Motorgehäuses ausgerichtet ist.

Aus der CN 104 113 149 A und aus der CN 203 456 955 U sind Motorstatoranordnungen bekannt. Die Motorstatoranordnungen umfassen jeweils eine auf einem Stator angeordnete Platine, wobei die Platine Einführöffnungen für elektrische Leiter aufweist. Durch jede Einführöffnung der Platine ist je ein elektrischer Leiter einer Verdrahtung der Motorstatoranordnung geführt.

Die EP 0 751 609 A2 offenbart eine Lichtmaschine für ein Fahrzeug. Stirnseitig ist an einem Stator der Lichtmaschine eine Leiterplatte mit rechteckigen Öffnungen angeordnet. Durch jede Öffnung ist je ein elektrischer Leiter geführt. Die Leiter sind in u-förmigen, den Öffnungen zugeordneten Leiterklemmen eingeklemmt.

Die WO 2005/020408 A2 offenbart einen Reluktanzmotor. Ein Verbindungsabschnitt ist an einem Oberteil eines Statorabdeckkörpers befestigt und umfasst fünf unterschiedliche Höhen aufweisende Wickeldrahtumlenkelemente. Wicklungsdrähte sind unter Umlenkung mittels der Wickeldrahtumlenkelemente zu einem Anschlussstecker geführt.

Der Stand der Technik bietet jedoch keine Lösung für eine prozesssichere und einfache Verschaltung einer Verdrahtung eines Stators. Ferner sind die aus dem Stand der Technik bekannten Vorrichtungen zur Verschaltung der Verdrahtung eines Stators einer elektrischen Maschine sowie die dafür bekannten Verfahren nicht zur Anwendung von verschiedenen Schweißverfahren zur Verbindung der elektrischen Leiter der Verdrahtung geeignet. Auch eine Abschottung der Verdrahtung gegenüber Öl oder anderen Flüssigkeiten ist oft nicht ausreichend gewährleistet.

### Darstellung der Erfindung, Aufgabe, Lösung, Vorteile

Der Erfindung liegt die Aufgabe zugrunde, eine Vorrichtung zur Verschaltung der Verdrahtung eines Stators einer elektrischen Maschine bereitzustellen, welche einfach zu montieren ist und welche eine einfache und prozesssichere Verschaltung der Verdrahtung ermöglicht, und mit welcher eine automatische Positionierung von elektrischen Leitern der Verdrahtung erzielt wird. Ferner ist es Aufgabe der vorliegenden Erfindung eine Vorrichtung zur Verschaltung der Verdrahtung eines Stators bereitzustellen, mit welcher die Verschaltung unter Anwendung verschiedener Schweißverfahren durchführbar ist, und welche eine besonders gute Abschottung der Verdrahtung vor Öl und anderen Flüssigkeiten gewährleistet.

Zur Lösung der Aufgabe wird eine Vorrichtung zur Verschaltung der Verdrahtung eines Stators einer elektrischen Maschine gemäß Anspruch 1 vorgeschlagen, umfassend einen Grundkörper mit einer Unterseite wobei der Grundkörper mit der Unterseite auf einen Stator aufsetzbar ist, wobei der Grundkörper mindestens sechs Positionierungsmittel zur Aufnahme und Positionierung von jeweils mindestens zwei elektrischen Leitern einer Verdrahtung des Stators umfasst, wobei jedes Positionierungsmittel eine Einführöffnung aufweist, wobei die Einführöffnung an der Unterseite des Grundkörpers angeordnet ist, sodass die jeweils mindestens zwei elektrischen Leiter beim Aufsetzen der Vorrichtung auf den Stator durch die Einführöffnungen in die Positionierungsmittel einführbar sind, wobei jedes Positionierungsmittel einen Führungsabschnitt und einen Verschaltungsabschnitt aufweist, wobei der Verschaltungsabschnitt eine Hülse oder ein Teilabschnitt einer Hülse ist, wobei die Positionierungsmittel derart ausgebildet sind, dass die jeweils mindestens zwei elektrischen Leiter beim Aufsetzen des Grundkörpers auf den Stator mittels der Führungsabschnitte in die Verschaltungsabschnitte geführt werden, wobei der Grundkörper mindestens drei Leiterbahnen aufweist, wobei die mindestens drei Leiterbahnen je ein Anschlusselement zum Anschluss an eine Hauptphase einer Dreiphasenwechselstromquelle aufweisen, wobei an eine erste Leiterbahn die Verschaltungsabschnitte von mindestens zwei Positionierungsmitteln elektrisch leitend angeschlossen sind, wobei an eine zweite Leiterbahn die Verschaltungsabschnitte von mindestens zwei weiteren Positionierungsmitteln elektrisch leitend angeschlossen sind, wobei an eine dritte Leiterbahn die Verschaltungsabschnitte von mindestens zwei weiteren Positionierungsmitteln elektrisch leitend angeschlossen sind, wobei die mindestens drei Leiterbahnen jeweils in einer der parallel zur Unterseite des Grundkörpers verlaufenden Ebenen im Grundkörper angeordnet sind.

Vorteilhafte Details der Vorrichtung zur Verschaltung der Verdrahtung eines Stators einer elektrischen Maschine ergeben sich auch aus den von Anspruch 1 abhängigen Ansprüchen. Jedes Positionierungsmittel der Vorrichtung weist erfindungsgemäß einen Führungsabschnitt und einen Verschaltungsabschnitt auf. Dabei können der Führungsabschnitt und der Verschaltungsabschnitt als unterschiedliche Teilabschnitte der Positionierungsmittel ausgebildet sein, oder der Führungsabschnitt und der Verschaltungsabschnitt sind zumindest teilweise oder vollständig als derselbe Teilabschnitt des jeweiligen Positionierungsmittels ausgebildet. Somit können die Positionierungsmittel als einen Teilabschnitt einen Führungsabschnitt aufweisen, welcher von einem anderen Teilabschnitt des jeweiligen Positionierungsmittels, welcher als Verschaltungsabschnitt ausgebildet ist, räumlich und funktional zu unterscheiden ist. Jedoch kann auch vorgesehen sein, dass ein Teilabschnitt des jeweiligen Positionierungsmittels zumindest teilweise den Führungsabschnitt und teilweise den Verschaltungsabschnitt bildet, oder dass ein Teilabschnitt des jeweiligen Positionierungsmittels gleichzeitig sowohl den Führungsabschnitt als auch den Verschaltungsabschnitt bildet, sodass dieser eine Teilabschnitt räumlich und funktionell sowohl dem Führungsabschnitt als auch dem Verschaltungsabschnitt entspricht.

Durch Vorsehen von Positionierungsmitteln mit einer Einführöffnung und mit einem Führungsabschnitt und einem Verschaltungsabschnitt wird der Vorteil erzielt, dass beim Aufsetzen des Grundkörpers auf einen Stator jeweils mindestens zwei elektrische Leiter einer Verdrahtung des Stators in die Einführöffnungen eingeführt werden können und dann mittels der Führungsabschnitte in die Verschaltungsabschnitte geführt werden, wodurch die jeweils mindestens zwei elektrischen Leiter in dem jeweiligen Positionierungsmittel und insbesondere in dem Verschaltungsabschnitt zumindest geringfügig positioniert werden. Beim Aufsetzen der Vorrichtung auf den Stator ist somit lediglich dafür Sorge zu tragen, dass die jeweils mindestens zwei elektrischen Leiter in die Einführöffnungen der Positionierungsmittel eingeführt werden. Die anschließende Positionierung der elektrischen Leiter in den Verschaltungsabschnitten der Positionierungsmittel erfolgt durch die Führung der elektrischen Leiter mittels der Führungsabschnitte automatisch und bedarf keiner weiteren Fertigungsschritte.

Durch die automatische Positionierung der jeweils mindestens zwei elektrischen Leiter wird somit eine einfache Montage beziehungsweise Verschaltung der Verdrahtung eines Stators ermöglicht. Zudem wird auch die Montage beziehungsweise das Aufsetzen der Vorrichtung auf oder an dem Stator vereinfacht.

Die Vorrichtung kann auch als Verschaltungselement oder ZSB-Verschaltungselement beziehungsweise Zusammenbau-Verschaltungselement bezeichnet werden.

Zur Verschaltung der Verdrahtung des Stators kann beispielsweise vorgesehen sein, dass der Verschaltungsabschnitt im am Stator angeordneten Zustand der Vorrichtung mit den in dem Verschaltungsabschnitt angeordneten mindestens zwei elektrischen Leiter elektrisch leitend verbunden wird. Erfindungsgemäß werden mindestens zwei elektrische Leiter beim Aufsetzen der Vorrichtung auf den Stator in das Positionierungsmittel eingeführt. Entsprechend werden zur Verschaltung dann die in dem Positionierungsmittel beziehungsweise die in dem Verschaltungsabschnitt des Positionierungsmittels angeordneten mindestens zwei elektrischen Leiter miteinander und/oder mit dem Positionierungsmittel beziehungsweise mit dem Verschaltungsabschnitt des Positionierungsmittels elektrisch leitend verbunden. Bevorzugt ist dafür zumindest der Verschaltungsabschnitt des Positionierungsmittels elektrisch leitfähig ausgebildet. Besonders bevorzugt sind genau zwei elektrische Leiter im auf dem Stator aufgesetzten Zustand der Vorrichtung in dem mindestens einen Positionierungsmittel, insbesondere im Verschaltungsabschnitt des mindestens einen Positionierungsmittels, angeordnet.

Die Vorrichtung ist zur Verschaltung der Verdrahtung eines Stators mit einer Wellenwicklung geeignet. Jedoch können mit der Vorrichtung auch andere Verdrahtungen wie beispielsweise Schleifenwicklungen oder Wicklungen unter Verwendung von sogenannten Hairpins verschaltet werden.

Die Vorrichtung ist ferner mit der Unterseite des Grundkörpers beispielsweise auf einer Stirnseite oder auf einer Umfangsseite des Stators anordbar.

Durch die Ausgestaltung des Verschaltungsabschnitts in Form einer Hülse beziehungsweise als Teilabschnitt einer Hülse wird ein einfach herzustellendes und besonders effektives Positionierungsmittel bereitgestellt, welches eine einfache Positionierung und Verschaltung der Verdrahtung eines Stators einer elektrischen Maschine ermöglicht. Es wird somit ein Hülsensystem gebildet, welches für eine automatische Positionierung der elektrischen Leiter der Verdrahtung des Stators sorgt, sodass diese Verdrahtung anschließend einfach und prozesssicher verschaltet werden kann.

Bevorzugt kann vorgesehen sein, dass der Grundkörper mindestens sechs, bevorzugt mindestens zwölf Positionierungsmittel umfasst.

Durch Vorsehen von mindestens sechs Positionierungsmitteln kann die Verdrahtung des Stators in unterschiedlicher Weise verschaltet werden.

Besonders bevorzugt sind im auf dem Stator aufgesetzten Zustand der Vorrichtung in jedem der Positionierungsmittel, insbesondere in den Verschaltungsabschnitten der Positionierungsmittel genau zwei elektrische Leiter angeordnet.

Es können mindestens zwei Positionierungsmittel, insbesondere die Verschaltungsabschnitte von mindestens zwei Positionierungsmittel elektrisch miteinander verbunden werden. Ist beispielsweise in jedem der mindestens zwei miteinander elektrisch verbundenen Positionierungsmittel jeweils ein elektrischer Leiter der Verdrahtung angeordnet, so können die elektrischen Leiter über die elektrisch miteinander verbundenen Positionierungsmittel, insbesondere über die elektrisch miteinander verbundenen Verschaltungsabschnitte, verschaltet werden, wobei gegebenenfalls noch die elektrischen Leiter mit den jeweiligen Verschaltungsabschnitten elektrisch verbunden werden müssen.

Zudem ist es möglich, in einem Positionierungsmittel beziehungsweise in dem Verschaltungsabschnitt des Positionierungsmittels mindestens zwei elektrische Leiter der Verdrahtung anzuordnen. Zur Verschaltung können die mindestens zwei im Verschaltungsabschnitt angeordneten elektrischen Leiter miteinander und/oder mit dem Verschaltungsabschnitt elektrisch verbunden werden. Sind die mindestens zwei elektrischen Leiter mit dem Verschaltungsabschnitt elektrisch verbunden und ist zudem der Verschaltungsabschnitt mit einem weiteren Verschaltungsabschnitt eines weiteren Positionierungsmittels elektrisch verbunden, so werden dadurch auch die elektrischen Leiter in den jeweiligen Positionierungsmitteln miteinander verschaltet.

Bevorzugt können ein ganzzahliges Vielfaches von drei Positionierungsmitteln vorgesehen sein. Jedes der Positionierungsmittel, insbesondere jeder Verschaltungsabschnitt der Positionierungsmittel, kann dann mit je einer der Hauptphasen einer Dreiphasenwechselstromquelle, insbesondere mit der U-, der V- oder der W-Phase verbunden werden. Sind beispielsweise zwei elektrische Leiter der Verdrahtung in einem ersten der Positionierungsmittel angeordnet, so können diese miteinander und/oder mit dem Positionierungsmittel beziehungsweise mit dem Verschaltungsabschnitt des Positionierungsmittels und einer ersten Hauptphase, beispielsweise der U-Phase, verbunden werden. Zwei weitere elektrische Leiter können in einem zweiten Positionierungsmittel angeordnet sein und miteinander und/oder mit dem Verschaltungsabschnitt des zweiten Positionierungsmittels elektrisch verbunden und an eine zweite Hauptphase, beispielsweise die V-Phase der Dreiphasenwechselstromquelle angeschlossen sein. In einem dritten Positionierungsmittel können zwei weitere elektrische Leiter der Verdrahtung aufgenommen sein, welche miteinander und/oder mit dem Verschaltungsabschnitt des dritten Positionierungsmittels verbunden sind und an die dritte Hauptphase, beispielsweise die W-Phase, der Dreiphasenwechselstromquelle, angeschlossen sind.

Ist insbesondere ein ganzzahliges Vielfaches von drei Positionierungsmitteln vorgesehen, so können mehrere einer Hauptphase zugeordnete Positionierungsmittel elektrisch miteinander verbunden werden, sodass insgesamt eine Vielzahl von elektrischen Leitern der Verdrahtung untereinander mittels mehrerer Positionierungsmittel beziehungsweise mittels der Verschaltungsabschnitte der mehreren Positionierungsmittel verschaltet und mit einer Hauptphase verbunden sind.

Ein Positionierungsmittel kann zur Herstellung eines Sternpunktes einer Dreiphasenwechselstromschaltung ausgebildet sein. Auch kann vorzugsweise vorgesehen sein, dass ein ganzzahliges Vielfaches von vier Positionierungsmitteln im Grundkörper angeordnet ist.

Weiter bevorzugt kann vorgesehen sein, dass die Leiterbahnen aus Kupfer und/oder Aluminium bestehen.

Vorteilhafterweise können die Leiterbahn dazu dienen, mindestens zwei Positionierungsmittel, insbesondere die Verschaltungsabschnitte von mindestens zwei Positionierungsmitteln, miteinander elektrisch zu verbinden. Hierdurch können beispielsweise die Verschaltungsabschnitte von mindestens zwei Positionierungsmitteln mittels der Leiterbahnen, an welche die Verschaltungsabschnitte elektrisch leitend angeschlossen sind, mit einer der Hauptphasen einer Dreiphasenwechselstromquelle verbunden werden.

Sind mindestens zwei Positionierungsmittel dazu vorgesehen, einen Sternpunkt der Verdrahtung des Stators zu bilden, so können diese Positionierungsmittel, beziehungsweise die Verschaltungsabschnitte dieser Positionierungsmittel mittels einer Leiterbahn elektrisch miteinander verbunden werden, sodass diese auf dem gleichen elektrischen Potenzial liegen. Sind somit in diesen Positionierungsmitteln elektrische Leiter der Verdrahtung angeordnet und mit den Verschaltungsabschnitten elektrisch verbunden, so können diese elektrischen Leiter über die Verschaltungsabschnitte der jeweiligen Positionierungsmittel und die mindestens eine Leiterbahn zu einem Sternpunkt verbunden werden.

Auch können mehr als drei Leiterbahnen vorgesehen sein, beispielsweise vier Leiterbahnen. Eine erste Leiterbahn dient zur Verbindung von mindestens zwei Positionierungsmitteln beziehungsweise den Verschaltungsabschnitten von mindestens zwei Positionierungsmitteln sowie zur Verbindung dieser Verschaltungsabschnitte mit einer der Hauptphasen der Dreiphasenwechselstromquelle dienen. Eine zweite Leiterbahn dient zur elektrischen Verbindung von mindestens zwei weiteren Positionierungsmitteln beziehungsweise den Verschaltungsabschnitten von mindestens zwei weiteren Positionierungsmitteln und zur Verbindung dieser Verschaltungsabschnitte mit einer zweiten Phase der Dreiphasenwechselstromquelle. Eine dritte elektrische Leiterbahn dient zur elektrischen Verbindung von wiederum mindestens zwei weiteren Positionierungsmitteln beziehungsweise den Verschaltungsabschnitten von mindestens zwei weiteren Positionierungsmitteln und zur Verbindung dieser Verschaltungsabschnitte mit der dritten Hauptphase der Dreiphasenwechselstromquelle. Ist eine vierte Leiterbahn vorgesehen, können mittels der vierten Leiterbahn Verschaltungsabschnitte von mindestens zwei weiteren Positionierungsmitteln elektrisch miteinander verbunden werden, sodass diese den Sternpunkt eines Dreiphasenwechselstromsystems bilden. Sind in den vorstehend beschriebenen Positionierungsmitteln, insbesondere in den Verschaltungsabschnitten elektrische Leiter der Verdrahtung angeordnet und miteinander und/oder mit den Verschaltungsabschnitten der Positionierungsmittel elektrisch verbunden, so wird durch die Gesamtheit der Positionierungsmittel beziehungsweise deren Verschaltungsabschnitte eine mögliche Verschaltung der Verdrahtung eines Stators einer elektrischen Maschine hergestellt.

Weiter bevorzugt können vier Leiterbahnen vorgesehen sein, wobei eine der bevorzugt vier Leiterbahnen als Sternpunkt der Verdrahtung des Stators ausgebildet ist.

Weiter kann bevorzugt vorgesehen sein, dass die mindestens vier Leiterbahnen, zumindest teilweise in einer, bevorzugt in mehreren, im Wesentlichen parallel zur Unterseite des Grundkörpers verlaufenden Ebenen, insbesondere im Grundkörper, angeordnet sind.

Durch die Anordnung der mindestens drei oder mindestens vier Leiterbahnen in einer beziehungsweise mehreren im Wesentlichen parallel zur Unterseite des Grundkörpers verlaufenden Ebenen kann eine besonders raumsparende Verschaltung der Verdrahtung des Stators erhalten werden.

Beispielsweise können Positionierungsmittel beziehungsweise Verschaltungsabschnitte von Positionierungsmitteln, welche zur elektrischen Verbindung mit einer der Hauptphasen der Dreiphasenwechselstromquelle vorgesehen sind, durch eine Leiterbahn miteinander elektrisch verbunden werden, welche in einer ersten Ebene innerhalb des Grundkörpers der Vorrichtung angeordnet ist. Mindestens zwei weitere Verschaltungsabschnitte von mindestens zwei weiteren Positionierungsmitteln, welche zur Anbindung an eine zweite Hauptphase der Dreiphasenwechselstromquelle vorgesehen sind, können mittels einer zweiten Leiterbahn elektrisch miteinander verbunden werden. Da die erste und die zweite Leiterbahn auf unterschiedlichen Ebenen, insbesondere parallel zur Unterseite des Grundkörpers, angeordnet sind, können die zu der jeweiligen Hauptphase gehörenden Positionierungsmittel unabhängig von deren räumlicher Anordnung in einfacher Weise miteinander elektrisch verbunden werden. Entsprechend kann die dritte Leiterbahn vorgesehen sein, die Verschaltungsabschnitte von mindestens zwei Positionierungsmitteln elektrisch miteinander zu verbinden, welche an eine dritte Hauptphase angebunden werden sollen. Die bevorzugte vierte Leiterbahn kann zur elektrischen Verbindung von Verschaltungsabschnitten von mindestens zwei weiteren Positionierungsmitteln zur Herstellung eines Sternpunktes der Verschaltung beziehungsweise Verdrahtung des Stators ausgebildet sein.

Zudem kann bevorzugt vorgesehen sein, dass der Führungsabschnitt ein Kanal oder eine Hülse oder ein Rohr oder ein Röhrchen ist, oder dass der Führungsabschnitt ein Teilabschnitt eines Kanals oder einer Hülse oder eines Rohrs oder eines Röhrchens ist.

Durch die bevorzugte Ausgestaltung des Führungsabschnitts in Form eines Kanals, einer Hülse, eines Rohrs oder eines Röhrchens beziehungsweise als Teilabschnitt eines Kanals, einer Hülse, eines Rohres oder eines Röhrchens wird ein einfach herzustellendes und besonders effektives Positionierungsmittel bereitgestellt, welches eine einfache Positionierung und Verschaltung der Verdrahtung eines Stators einer elektrischen Maschine ermöglicht. Es wird somit ein Kanal-, Hülsen-, Rohr- oder ein Röhrchensystem gebildet, welches für eine automatische Positionierung der elektrischen Leiter der Verdrahtung des Stators sorgt, sodass diese Verdrahtung anschließend einfach und prozesssicher verschaltet werden kann.

Je nachdem, ob Führungsabschnitt und Verschaltungsabschnitt unterschiedlichen Teilabschnitten des mindestens einen Positionierungsmittels oder aber zumindest teilweise oder vollständig dem gleichen bzw. demselben Teilabschnitt des mindestens einen Positionierungsmittels entsprechen, kann entweder der Führungsabschnitt als Kanal ausgebildet sein und der Verschaltungsabschnitt als Hülse oder als Rohr oder als Röhrchen. Auch ist denkbar, dass das Positionierungsmittel insgesamt als ein Kanal, als eine Hülse, als ein Rohr oder ein Röhrchen ausgebildet ist, in welchem Fall der Führungsabschnitt ein Teilabschnitt des Kanals, der Hülse, des Rohrs oder des Röhrchens ist und wobei der Verschaltungsabschnitt ein weiterer Teilabschnitt des Kanals, der Hülse oder des Rohrs oder des Röhrchens ist. Darüber hinaus können aber auch Führungsabschnitt und Verschaltungsabschnitt dem gleichen Teilabschnitt des Kanals, der Hülse, des Rohr oder des Röhrchens entsprechen. Das Positionierungsmittel kann bevorzugt auch als ein Positionierungsmittel mit drei Teilabschnitten betrachtet werden, wobei der Führungsabschnitt aus dem ersten und dem zweiten Teilabschnitt gebildet wird beziehungsweise diesen Teilabschnitten entspricht, und wobei der Verschaltungsabschnitt aus dem zweiten und dem dritten Teilabschnitt gebildet wird beziehungsweise diesen Teilabschnitten entspricht, sodass der Führungsabschnitt und der Verschaltungsabschnitt beide zumindest teilweise von dem zweiten Teilabschnittes des Positionierungsmittels gebildet werden. In diesem Fall ist der zweite Teilabschnitt des Positionierungsmittels räumlich und funktionell identisch mit je einem Teil des Führungsabschnitts sowie des Verschaltungsabschnitts.

Besonders bevorzugt ist der Verschaltungsabschnitt als eine Hülse ausgebildet, und der Führungsabschnitt ist als ein Kanal ausgebildet, wobei der Kanal des Führungsabschnittes die Einführöffnung aufweist und wobei sich an den Führungsabschnitt der Verschaltungsabschnitt direkt anschließt, sodass ein elektrischer Leiter, welcher in die Einführöffnung des Führungsabschnittes eingeführt ist, von dem Führungsabschnitt in den Verschaltungsabschnitt geführt wird. Sind Führungsabschnitt und Verschaltungsabschnitt als gerade ausgebildeter Kanal, Hülse, Rohr oder Röhrchen ausgebildet, so ist insbesondere bevorzugt vorgesehen, dass Führungsabschnitt und Verschaltungsabschnitt derart zueinander angeordnet sind, dass sie zusammen ein gerades, insbesondere kanal-, hülsen-, rohr-, oder röhrchenförmiges Positionierungselement bilden.

Weiter bevorzugt kann vorgesehen sein, dass der Kanal oder die Hülse oder das Rohr oder das Röhrchen einen Kunststoff und/oder ein Metall umfasst und/oder aus einem Kunststoff oder einem Metall besteht, wobei der Kunststoff bevorzugt PPA oder PA oder PPS ist und/oder wobei das Metall bevorzugt Kupfer oder Aluminium ist.

Dabei wird insbesondere bevorzugt, dass der Verschaltungsabschnitt ein Metall umfasst oder aus einem Metall besteht. Eine Ausbildung des Verschaltungsabschnittes mit oder aus einem Metall gestattet die Herstellung einer elektrischen Verbindung des Verschaltungsabschnittes mit einem oder mehreren in dem Verschaltungsabschnitt angeordneten elektrischen Leitern der Verdrahtung des Stators. Ist der Führungsabschnitt identisch mit dem Verschaltungsabschnitt, so ist dieser somit auch aus Metall ausgebildet oder umfasst ein Metall. Ist der Führungsabschnitt jedoch zumindest teilweise ein Abschnitt des Positionierungsmittels, welcher nicht auch das Verschaltungsmittel bildet, so ist insbesondere bevorzugt, dass der Führungsabschnitt zumindest teilweise einen Kunststoff umfasst oder aus einem Kunststoff besteht. In diesem Fall können die Verschaltungsabschnitte der Positionierungsmittel aus Hülsen aus Metall bestehen, welche im Grundkörper der Vorrichtung angeordnet sind und mit einem Material, insbesondere einer Kunsststoffumspritzung, im Grundkörper fixiert werden. Das Material, insbesondere die Kunststoffumspritzung, weist wiederum Kanäle auf, welche die Führungsabschnitte der Positionierungsmittel bilden. Die Kanäle der Führungsabschnitte sind zudem weiter bevorzugt fluchtend mit den Hülsen der zugeordneten Verschaltungsabschnitte ausgerichtet, so dass diese gemeinsam je ein Positionierungsmittel bilden. Das Positionierungsmittel besteht somit aus einem Kanal in dem Material, insbesondere in der Kunsttstoffumspritzung, und einer in dem Material, insbesondere in der Kunststoffumspritzung, angeordneten und mit dem Kanal fluchtend ausgerichteten Hülse.

Die Wahl des Kunststoffes beziehungsweise die Wahl des Metalls kann dabei bevorzugt in Abhängigkeit von den zu erwartenden Betriebsbedingungen der elektrischen Maschine abhängig gemacht werden. Insbesondere kann die Wahl des Metalls und/oder des Kunststoff von den spezifischen Wärmeausdehnungskoeffizienten der Materialien abhängig gemacht werden, wobei darauf geachtet werden kann, dass insbesondere Werkstoffkombinationen, beispielsweise für elektrische Leiter, Verschaltungsabschnitt und/oder Leiterbahn gewählt werden, welche die gleichen Wärmeausdehnungseigenschaften haben.

Bevorzugt ist vorgesehen, dass jedes Positionierungsmittel zur Aufnahme von genau zwei elektrischen Leitern ausgebildet ist, wobei die genau zwei elektrischen Leiter beim Aufsetzen des Grundkörpers auf den Stator mittels des Führungsabschnitts in den Verschaltungsabschnitt geführt werden.

Weiter kann bevorzugt vorgesehen sein, dass die mindestens zwei elektrischen Leiter in einem im Verschaltungsabschnitt angeordneten Zustand mit dem Verschaltungsabschnitt formschlüssig und/oder stoffschlüssig verbindbar sind, und/oder dass die mindestens zwei elektrischen Leiter in einem im Verschaltungsabschnitt angeordneten Zustand formschlüssig und/oder stoffschlüssig miteinander verbindbar sind.

Somit können in vorteilhafter Weise zwei elektrische Leiter, welche im Verschaltungsabschnitt angeordnet sind, miteinander verbunden bzw. verschaltet werden. Auch ist es möglich, dass sich im Verschaltungsabschnitt nur ein elektrischer Leiter befindet, welcher mit dem Verschaltungsabschnitt verbunden wird. Darüber hinaus besteht die Möglichkeit, dass zwei oder mehr elektrische Leiter in dem Verschaltungsabschnitt angeordnet sind und miteinander sowie mit dem Verschaltungsabschnitt elektrisch verbunden sind.

Ferner kann vorgesehen sein, dass für die Verbindung der mindestens zwei elektrischen Leiter mit dem Verschaltungsabschnitt und/oder für die Verbindung der mindestens zwei elektrischen Leiter miteinander ein Schweißverfahren vorgesehen ist, wobei das Schweißverfahren bevorzugt ein formschlüssiges Schweißverfahren, insbesondere ein Widerstandspressschweißverfahren, oder ein stoffschlüssiges Schweißverfahren, insbesondere ein Laser- und/oder ein Plasma- und/oder ein Wolfram-Inertgasschweißverfahren, ist.

Es ist somit in vorteilhafter Weise möglich, mehrere unterschiedliche Verbindungsverfahren, insbesondere Schweißverfahren, zur Verbindung beziehungsweise Verschweißung des Verschaltungsabschnittes mit dem mindestens einen, bevorzugt mit genau zwei elektrischen Leitern, bereitzustellen. Bei einem stoffschlüssigen Verfahren, wie beispielsweise bei einem Laser-, einem Plasma- oder einem Wolfram-Inertgasschweißverfahren, kann bevorzugt vorgesehen sein, dass die elektrischen Leiter zumindest bereichsweise vor dem Verbinden oder Verschweißen abisoliert werden und/oder dass der Verschaltungsabschnitt des Positionierungsmittels, insbesondere die aus einem Metall bestehende oder ein Metall aufweisende Hülse, Rohr oder Röhrchen vorkomprimiert wird.

Der Schritt des Vorkomprimierens ist dabei insbesondere vorteilhaft, um zwei sich im Verschaltungsabschnitt des Positionierungsmittels befindliche elektrische Leiter physisch in Kontakt zu bringen, sodass das verwendete Verbindungsverfahren, insbesondere das verwendete stoffschlüssige Schweißverfahren, zu einer besonders effektiven Verbindung der mindestens zwei elektrischen Leiter und/oder der elektrischen Leiter mit dem Verschaltungsabschnitt führt.

Zwar kann bei einem formschlüssigen Verbindungsverfahren auch vorgesehen sein, dass ein Abisolieren beziehungsweise eine Vorkomprimierung stattfindet, dies ist jedoch in der Regel nicht zwingend notwendig.

Bevorzugt ist vorgesehen, dass die Vorrichtung eine Abdeckung umfasst, wobei die Abdeckung an einer, bevorzugt der Unterseite des Grundkörpers gegenüberliegenden, Oberseite des Grundkörpers anordbar ist.

Die Abdeckung wird dabei bevorzugt auf dem Grundkörper angeordnet, nachdem der Grundkörper auf den Stator aufgesetzt wurde. Somit wird eine Sichtüberprüfung der Positionierung und der Verschaltung oder der Verbindung des mindestens einen, bevorzugt der genau zwei, in jedem Positionierungsmittel angeordneten elektrischen Leiter der Verdrahtung miteinander oder mit dem Verschaltungsabschnitt möglich. Zudem wird der Grundkörper der Vorrichtung durch Aufsetzen der Abdeckung gegenüber der Außenumgebung abgeschlossen, sodass die Vorrichtung gegen ein Eindringen von Öl oder anderen Flüssigkeiten abgedichtet ist.

Weiter kann vorgesehen sein, dass ein erstes Verbindungmittel, bevorzugt eine Rastnase oder ein Rastnocken, am Grundkörper angeordnet ist, und dass ein zweites Verbindungsmittel, bevorzugt eine Rastlasche, an der Abdeckung angeordnet ist, wobei die Abdeckung durch eine Wirkverbindung des ersten Verbindungsmittels und des zweiten Verbindungsmittels an dem Grundkörper, bevorzugt lösbar, befestigbar ist.

Bevorzugt können die Verbindungsmittel auch als Clipverbindung oder Schraubverbindung oder jegliche weitere geeignete Verbindung ausgebildet sein. Durch Vorsehen des ersten Verbindungsmittel und des zweiten Verbindungsmittels wird eine dauerhafte und sichere Positionierung und Anordnung der Abdeckung an dem Grundkörper bereitgestellt.

Weiter kann vorgesehen sein, dass der Grundkörper, bevorzugt die Unterseite des Grundkörpers, einen Vergusskanal umfasst, wobei der Vergusskanal ausgebildet ist, ein Vergussmaterial, bevorzugt ein Harz oder einen Kunststoff, aufzunehmen, wobei der Grundkörper weiter bevorzugt eine Vergussmaterialeinfülleinrichtung, insbesondere einen Stutzen oder ein Vergussbecken, umfasst.

Durch das Vorsehen eines Vergusskanals, insbesondere auf der Unterseite des Grundkörpers, kann die Einführöffnung nach Einführung des mindestens einen elektrischen Leiters in das Positionierungsmittel und gegebenenfalls nach Verschaltung der Verdrahtung mittels des in den Vergusskanal eingegossenen Vergussmaterials verschlossen werden. Hierdurch wird ein weiterer Schutz gegen Eindringen von Öl oder weiteren Flüssigkeiten bereitgestellt.

Um ein möglichst einfaches Vergießen des Vergusskanals zu ermöglichen, kann an dem Grundkörper eine Vergussmaterialeinfülleinrichtung, insbesondere ein Stutzen oder ein Vergussbecken vorgesehen sein. Ist die Vergussmaterialeinfülleinrichtung als Stutzen oder als Vergussbecken ausgebildet, so ist dessen Funktionsweise bevorzugt, dass durch Einfüllen beziehungsweise Auffüllen des Stutzens oder des Vergussbeckens mit Vergussmaterial wie beispielsweise Harz oder Kunststoff der Füllstand des Vergussmaterials steigt und schließlich bei Erreichen einer Mindesthöhe in den Vergusskanal abfließt und insbesondere die Einführungsöffnungen der Positionierungsmittel verschließt.

Bevorzugt kann vorgesehen sein, dass eine Leiteinrichtung an der Unterseite, insbesondere an der Einführungsöffnung an der Unterseite des Grundkörpers angeordnet ist. Die Leiteinrichtung kann beispielsweise als Trichter oder ähnliches ausgebildet sein, wobei weiter bevorzugt die Leiteinrichtung, insbesondere der Trichter, zumindest teilweise als Teil des Vergusskanals ausgebildet ist. Die Leiteinrichtung ist derart ausgebildet, dass beim Aufsetzen der Vorrichtung auf den Stator die mindestens zwei elektrischen Leiter der Verdrahtung in die Einführöffnung des mindestens einen Positionierungsmittels eingeleitet werden.

In einer weiter bevorzugten Ausführungsform kann vorgesehen sein, dass der Grundkörper ein erstes Führungsmittel, insbesondere eine Führungsschiene, umfasst, wobei das erste Führungsmittel ausgebildet ist, mit einem am Stator angeordneten zweiten Führungsmittel, insbesondere einer Führungsschienenaufnahme, zusammenzuwirken, sodass die Vorrichtung beim Aufsetzen auf den Stator in eine am Stator angeordnete Position geführt wird.

Durch Vorsehen eines ersten Führungsmittels am Grundkörper und eines zweiten Führungsmittels am Stator wird eine einfache Montage der Vorrichtung an den Stator erzielt. Insbesondere wenn das erste Führungsmittel als Führungsschiene und das zweite Führungsmittel als Führungsschienenaufnahme ausgebildet ist, kann die Anordnung der Vorrichtung an dem Stator prozesssicher, einfach und kostengünstig erfolgen.

Eine weitere Lösung der der Erfindung zugrundeliegenden Aufgabe besteht in der Bereitstellung eines Stators einer elektrischen Maschine mit einer vorbeschriebenen Vorrichtung.

Ferner wird die der Erfindung zugrundeliegende Aufgabe durch die Bereitstellung eines Verfahrens zur Verschaltung der Verdrahtung eines Stators einer elektrischen Maschine gemäß Anspruch 10 gelöst wobei die elektrische Maschine eine vorher beschriebene Vorrichtung umfasst und wobei das Verfahren die Schritte:
- Bereitstellen eines Stators einer elektrischen Maschine,
- Aufsetzen des Grundkörpers der Vorrichtung mit der Unterseite auf den Stator, sodass jeweils mindestens zwei elektrische Leiter der Verdrahtung des Stators durch die jeweiligen Einführöffnungen der Positionierungsmittel eingeführt und mittels der Führungsabschnitte in die Verschaltungsabschnitte geführt werden,
- Verschweißen der elektrischen Leiter miteinander und/oder mit dem Verschaltungsabschnitt
umfasst.

Bevorzugt wird zum Verschweißen ein formschlüssiges Schweißverfahren, insbesondere ein Widerstandspressschweißverfahren, und/oder ein stoffschlüssiges Schweißverfahren, insbesondere ein Laser- und/oder ein Plasma- und/oder ein Wolfram-Inertgasschweißverfahren durchgeführt.

Weiter bevorzugt kann bei dem Verfahren vorgesehen sein, dass ein Vergusskanal des Grundkörpers mit einem Vergussmaterial vergossen wird.

Hierdurch wird sichergestellt, dass die Verschaltung, insbesondere die Einführöffnung des Positionierungsmittels durch den Verguss verschlossen und gegen Eindringen von Öl oder anderen Flüssigkeiten geschützt ist.

Weiter bevorzugt kann vorgesehen sein, dass das Verfahren den Schritt des Anordnens einer Abdeckung an den Grundkörper umfasst.

Weiter vorteilhaft kann vorgesehen sein, dass das Verfahren den Schritt des Abisolierens und/oder des Vorkomprimierens des mindestens einen Positionierungsmittels, insbesondere des Verschaltungsabschnitts, und/oder der mindestens zwei im Verschaltungsabschnitt angeordneten elektrischen Leiter umfasst.

Die Schritte des Abisolierens und/oder des Vorkomprimierens gestatten eine besonders effektive Verbindung der in dem Verschaltungsabschnitt angeordneten elektrischen Leiter untereinander beziehungsweise der mindestens zwei elektrischen Leiter mit dem Verschaltungsabschnitt.

Das Abisolieren und das Vorkomprimieren ist insbesondere bei einem stoffschlüssigen Verfahren vorteilhaft, jedoch kann auch bei formschlüssigen Verfahren ein Abisolieren oder ein Vorkomprimieren des mindestens einen Positionierungsmittels und/oder der mindestens zwei elektrischen Leiter stattfinden.

### Kurze Beschreibung der Figuren

Ein Ausführungsbeispiel der Erfindung wird nachstehend anhand der Zeichnungen näher erläutert. Es zeigen
- Fig. 1: eine perspektivische Ansicht einer Vorrichtung zur Verschaltung einer Verdrahtung angeordnet auf einem Stator,
- Fig. 2: eine weitere perspektivische Ansicht einer Vorrichtung zur Verschaltung einer Verdrahtung,
- Fig. 3a: eine erste Querschnittsdarstellung eines ersten Positionierungsmittels,
- Fig. 3b: eine zweite Querschnittsdarstellung eines zweiten Positionierungsmittels,
- Fig. 3c: eine dritte Querschnittsdarstellung eines dritten Positionierungsmittels,
- Fig. 4: eine erste perspektivische Darstellung eines Hülsensystems einer Vorrichtung zur Verschaltung einer Verdrahtung,
- Fig. 5: eine zweite Darstellung eines Hülsensystems einer Vorrichtung zur Verschaltung einer Verdrahtung,
- Fig. 6: eine dritte perspektivische Darstellung eines Hülsensystems einer Vorrichtung zur Verschaltung einer Verdrahtung,
- Fig. 7: eine vierte perspektivische Darstellung eines Hülsensystems einer Vorrichtung zur Verschaltung einer Verdrahtung,
- Fig. 8: eine Vorrichtung zur Verschaltung einer Verdrahtung mit einer Abdeckung,
- Fig. 9: eine perspektivische Ansicht einer Vorrichtung zur Verschaltung einer Verdrahtung mit einer Abdeckung,
- Fig. 10: eine zweite perspektivische Ansicht einer Vorrichtung zur Verschaltung einer Verdrahtung mit einer Abdeckung,
- Fig. 11: eine dritte perspektivische Ansicht einer Vorrichtung zur Verschaltung einer Verdrahtung mit einem Vergusskanal.

### Ausführliche Beschreibung der Zeichnungen

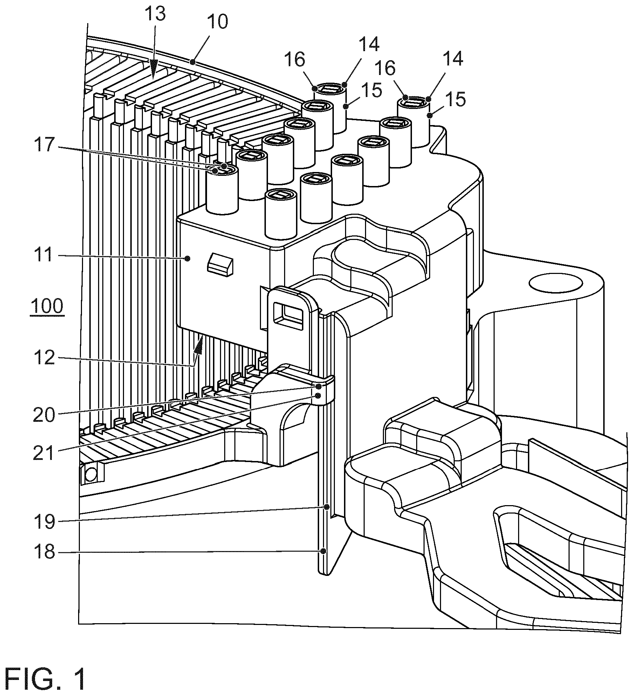

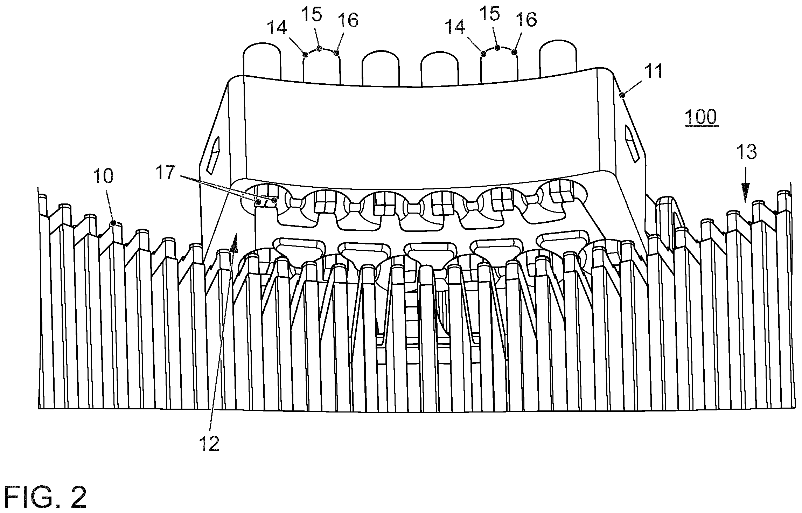

In den Fig. 1 und 2 ist eine Vorrichtung 100 zur Verschaltung der Verdrahtung eines Stators 10 dargestellt. Die Vorrichtung 100 umfasst einen Grundkörper 11 mit einer Unterseite 12. Der Grundkörper 11 ist mit der Unterseite 12 auf den Stator 10, insbesondere auf eine Stirnfläche 13 des Stators 10, aufgesetzt. Der Grundkörper 11 umfasst dabei in der dargestellten Ausführungsform zwölf Positionierungsmittel 14, welche als Hülsen 15 ausgebildete Verschaltungsabschnitte 16 aufweisen. Jede Hülse 15 der Positionierungsmittel 14 ist zur Aufnahme von je zwei elektrischen Leitern 17 der Verdrahtung des Stators 10 ausgebildet. Für das Aufsetzen der Vorrichtung 100 auf den Stator 10 weist der Grundkörper 11 ein in Form einer Führungsschiene 18 ausgebildetes erstes Führungsmittel 19 auf. Mit der Führungsschiene 18 zusammenwirkend ist an dem Stator 10 ein zweites Führungsmittel 20 vorgesehen, welches als Führungsschienenaufnahme 21 ausgebildet ist. Beim Aufsetzen der Vorrichtung 100 auf den Stator 10 wird der Grundkörper 11 mittels der Führungsschiene 18 und der Führungsschienenaufnahme 21 geführt. Beim Erreichen der Endposition der Vorrichtung 100 auf dem Stator 10 rastet der Grundkörper 11 in einer Rastposition ein. Zur Verschaltung der Verdrahtung werden die je zwei in den Verschaltungsabschnitten 16 angeordneten elektrischen Leiter 17 untereinander und mit dem den Verschaltungsabschnitt 16 bildenden Teil der jeweiligen Hülse 15 stoffschlüssig oder formschlüssig verbunden, beispielsweise durch ein Widerstandspressschweißverfahren, ein Laser-, ein Plasma-, oder ein Wolfram-Inertgasschweißverfahren.

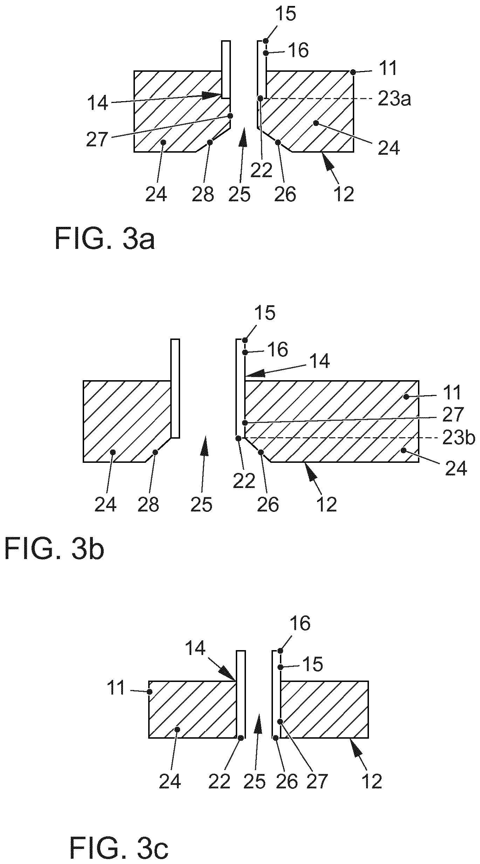

Anhand der Fig. 3a, 3b, 3c sowie 4 bis 7 wird der Aufbau der Positionierungsmittels 14 näher erläutert.

In den Fig. 3a 3b und 3c ist je ein anderes in dem Grundkörper 11 der Vorrichtung angeordnetes Positionierungsmittel 14 in einer Querschnittsdarstellung gezeigt.

Das in Fig. 3a gezeigte Positionierungsmittel 14 weist einen als Teil einer Hülse 15 ausgebildeten Verschaltungsabschnitt 16 auf, wobei das untere Ende 22 der Hülse 15 auf einer ersten Ebene 23a oberhalb der Unterseite 12 des Grundkörpers 11 angeordnet ist. Die Hülse 15 ist in eine Kunststoffumspritzung 24 eingefasst. Die Kunststoffumspritzung 24 bildet einen Kanal 25 mit einer Einführöffnung 26. Einführöffnung 26 und Kanal 25 sind dabei derart ausgerichtet, dass diese mit der Hülse 15 fluchten. Der Verschaltungsabschnitt 16 des Positionierungsmittels 14 wird von dem aus der Kunststoffumspritzung 24 herausragenden Teil der Hülse 15 gebildet, wohingegen der Führungsabschnitt 27 durch den Kanal 25 sowie dem in der Kunststoffumspritzung 24 angeordneten Teil der Hülse 15 gebildet wird. Im Bereich der Einführöffnung 26 weist die Unterseite 12 einen Trichter 28 auf, welcher das Einführen eines oder mehrerer elektrischer Leiter 17 in das Positionierungsmittel 14 unterstützt.

In Fig. 3b ist eine weitere Hülse 15 eines zweiten Positionierungsmittels 14 dargestellt, deren unteres Ende 22 in einer zweiten Ebene 23b liegt. In diesem Fall hüllt die Kunststoffumspritzung 24 die Hülse 15 so ein, dass bei der Einführung eines elektrischen Leiters 17 in die Einführöffnung 26 der elektrische Leiter 17 direkt mittels der Hülse 15 geführt ist. Der in der Kunststoffumspritzung 24 angeordnete Teil der Hülse 15 entspricht in dem in Fig. 3b dargestellten Fall somit dem Führungsabschnittes 27.

Gegebenenfalls kann das Positionierungsmittel auch wie in Fig. 3c ausgebildet sein. Das untere Ende 22 der dort abgebildeten Hülse 15 schließt dabei bündig mit der Unterseite 12 des Grundkörpers ab, insbesondere ist kein Trichter 28 als Einführhilfe für die elektrischen Leiter 17 vorgesehen.

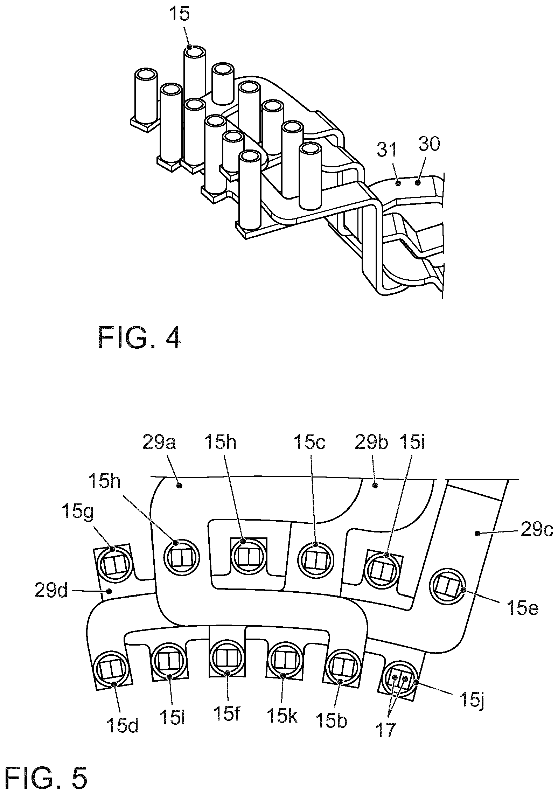

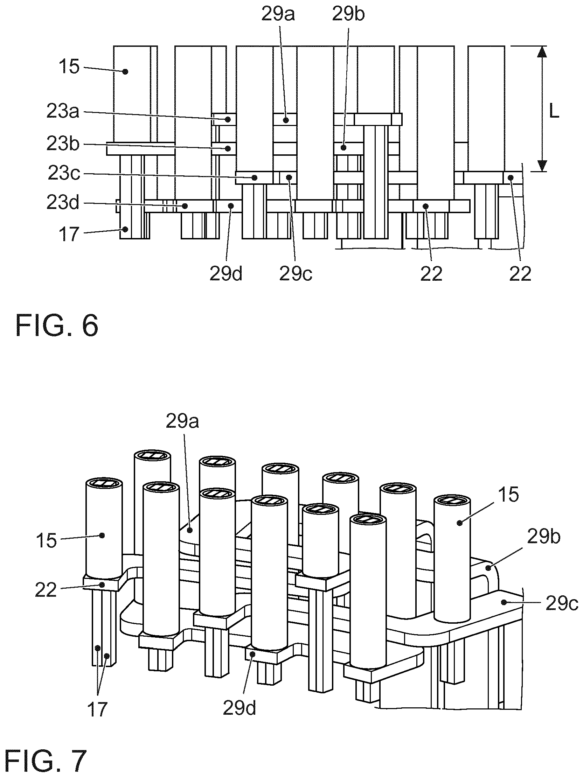

Die Fig. 4 bis 7 zeigen die Hülsen 15 ohne die Kunststoffumspritzung 24. Wie insbesondere aus Fig. 6 ersichtlich weisen die Hülsen 15 jeweils eine unterschiedliche Länge Lauf. Dies führt dazu, dass die jeweiligen unteren Enden 22 der Hülsen 15 innerhalb des Grundkörpers 11 auf unterschiedlichen Ebenen 23a, 23b, 23c, 23d liegen. Es sind elektrische Leiterbahnen 29a bis 29d vorgesehen. Die erste elektrische Leiterbahn 29a verbindet die Hülsen 15a und 15b (Fig. 5). Die zweite Leiterbahn 29b verbindet die Hülsen 15c und 15d, die dritte Leiterbahn 29c verbindet die zwei Hülsen 15e und 15f. Die vierte Leiterbahn 29d verbindet die Hülsen 15g bis 15l. Die elektrischen Leiterbahnen 29a bis 29d verlaufen jeweils in einer der parallel zur Unterseite 12 des Grundkörpers 11 verlaufenden Ebenen 23a bis 23d. Die Leiterbahnen 29a bis 29c weisen jeweils ein Anschlusselement 30 zum Anschluss an eine Hauptphase einer Dreiphasenwechselstromquelle auf (Fig. 4). Die Anschlusselemente 30 sind dabei als ummantelte Kupferschienen 31 ausgebildet. Die vierte Leiterbahn 29d verbindet die sechs Hülsen 15g bis 15l elektrisch miteinander und dient zur Herstellung eines Sternpunktes der Dreiphasenwechselstromschaltung.

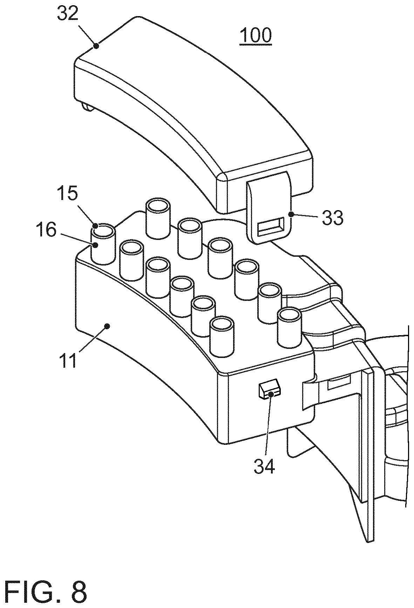

In Fig. 8 ist gezeigt, dass eine Abdeckung 32 mittels einer Rastlasche 33 und eines Rastnockens 34 am Grundkörper 11 angeordnet werden kann.

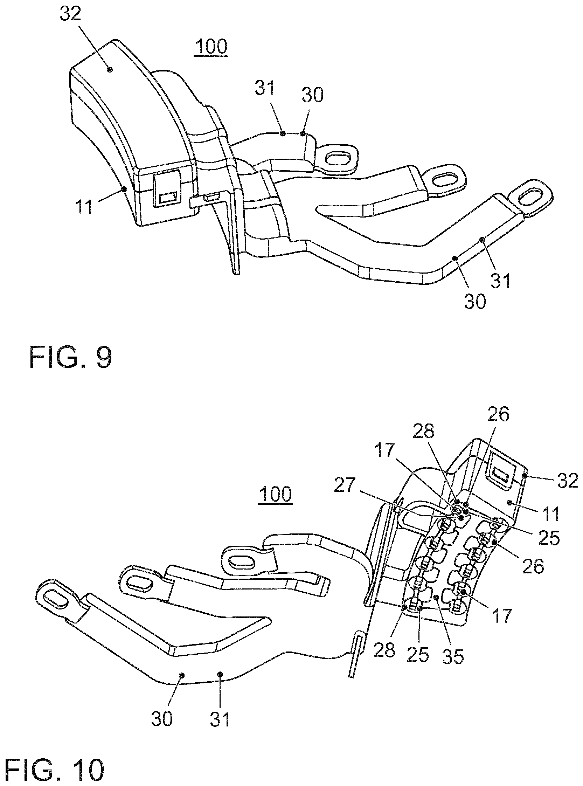

Eine vollständig zusammengebaute Vorrichtung 100 ist in den Fig. 9 und 10 dargestellt, wobei insbesondere die als umspritzte Kupferschienen 31 ausgebildeten Anschlusselemente 30 zu erkennen sind. In der perspektivischen Ansicht der Fig. 10 ist die Unterseite 12 des Grundkörpers 11 der Vorrichtung 100 zu erkennen. Die Unterseite 11 weist Einführöffnungen 26 auf, durch welche je zwei elektrische Leiter 17 in einen als Kanal 25 ausgebildeten Führungsabschnitt 27 eingeführt sind. Im Bereich der Einführöffnungen 26 sind Trichter 28 in der Unterseite 12 angeordnet, welche als Leitvorrichtung zum Einführen der je zwei elektrischer Leiter 17 in den Führungsabschnitt 27 dienen.

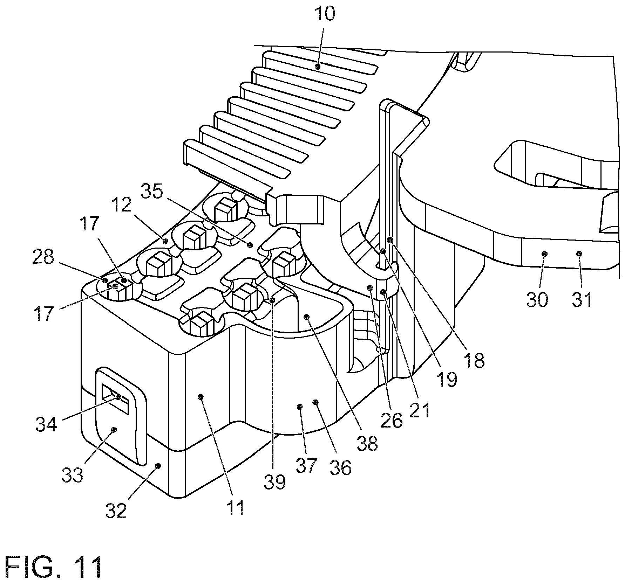

Die Unterseite 12 weist fernen einen Vergusskanal 35 auf, welcher zum Verschließen und Abdichten der Vorrichtung 100, insbesondere der Einführöffnungen 26, mit einem Vergussmaterial (nicht dargestellt) vergossen werden kann. In Fig. 11 ist gezeigt, dass zum Vergießen des Vergusskanals 35 am Grundkörper 11 eine als Vergussbecken 36 ausgebildete Vergussmaterialeinfülleinrichtung 37 mit einer Einfüllöffnung 38 angeordnet ist. Zum Vergießen des Vergusskanals 35 wird ein Vergussmaterial in die Einfüllöffnung 38 des Vergussbeckens 36 eingefüllt. Dieses Vergussmaterial steigt in dem Vergussbecken 36 langsam an, bis es einen vorbestimmten Füllstand erreicht. Bei dem vorbestimmten Füllstand fließt das Vergussmaterial über einen Absatz 39 in den Vergusskanal 35. Nach Austrocknen des Vergussmaterials ist der Vergusskanal 35 verschlossen.

## Patentansprüche

1. Vorrichtung (100) zur Verschaltung der Verdrahtung eines Stators (10) einer elektrischen Maschine umfassend einen Grundkörper (11) mit einer Unterseite (12), wobei der Grundkörper (11) mit der Unterseite (12) auf einen Stator (10) aufsetzbar ist, wobei der Grundkörper (11) mindestens sechs Positionierungsmittel (14) zur Aufnahme und Positionierung von jeweils mindestens zwei elektrischen Leitern (17) einer Verdrahtung des Stators (10) umfasst, wobei jedes Positionierungsmittel (14) eine Einführöffnung (26) aufweist, wobei die Einführöffnung (26) an der Unterseite (12) des Grundkörpers (11) angeordnet ist, sodass die jeweils mindestens zwei elektrischen Leiter (17) beim Aufsetzen der Vorrichtung auf den Stator (10) durch die Einführöffnungen (26) in die Positionierungsmittel (14) einführbar sind, wobei jedes Positionierungsmittel (14) einen Führungsabschnitt (27) und einen Verschaltungsabschnitt (16) aufweist, wobei der Verschaltungsabschnitt (16) eine Hülse (15, 15a-15l) oder ein Teilabschnitt einer Hülse (15, 15a-15l) ist, wobei die Positionierungsmittel (14) derart ausgebildet sind, dass die jeweils mindestens zwei elektrischen Leiter (17) beim Aufsetzen des Grundkörpers (11) auf den Stator (10) mittels der Führungsabschnitte (27) in die Verschaltungsabschnitte (16) geführt werden, wobei der Grundkörper (11) mindestens drei Leiterbahnen (29a-29d) aufweist, wobei die mindestens drei Leiterbahnen (29a-29d) je ein Anschlusselement (30) zum Anschluss an je eine Hauptphase einer Dreiphasenwechselstromquelle aufweisen, wobei an eine erste Leiterbahn (29a) die Verschaltungsabschnitte (16) von mindestens zwei Positionierungsmitteln (14) elektrisch leitend angeschlossen sind, wobei an eine zweite Leiterbahn (29b) die Verschaltungsabschnitte (16) von mindestens zwei weiteren Positionierungsmitteln (14) elektrisch leitend angeschlossen sind, wobei an eine dritte Leiterbahn (29c) die Verschaltungsabschnitte (16) von mindestens zwei weiteren Positionierungsmitteln (14) elektrisch leitend angeschlossen sind, **dadurch gekennzeichnet, dass** die mindestens drei Leiterbahnen (29a-29d) jeweils in einer der parallel zur Unterseite (12) des Grundkörpers (11) verlaufenden Ebenen (23a-23d) im Grundkörper (11) angeordnet sind.

2. Vorrichtung (100) nach Anspruch 1, **dadurch gekennzeichnet, dass** der Grundkörper (11) mindestens zwölf Positionierungsmittel (14) umfasst.

3. Vorrichtung (100) nach Anspruch 1 oder 2, **dadurch gekennzeichnet, dass** die Leiterbahnen (29a-29d) aus Kupfer und/oder Aluminium bestehen.

4. Vorrichtung (100) nach einem der vorgenannten Ansprüche, **dadurch gekennzeichnet, dass** vier Leiterbahnen (29a-29d) vorgesehen sind, wobei eine der vier Leiterbahnen (29a-29d) als Sternpunkt der Verdrahtung des Stators (10) ausgebildet ist.

5. Vorrichtung (100) nach Anspruch 4, **dadurch gekennzeichnet, dass** die mindestens vier Leiterbahnen (29a-29d), jeweils in einer der parallel zur Unterseite (12) des Grundkörpers (11) verlaufenden Ebenen (23a-23d), insbesondere im Grundkörper (11), angeordnet sind.

6. Vorrichtung (100) nach einem der vorgenannten Ansprüche, **dadurch gekennzeichnet, dass** der Führungsabschnitt (27) ein Kanal (25) oder eine Hülse (15, 15a-15l) oder ein Rohr oder ein Röhrchen ist, oder dass der Führungsabschnitt (27) ein Teilabschnitt eines Kanals (25) oder einer Hülse (15, 15a-151) oder eines Rohrs oder eines Röhrchens ist, und/oder dass der Kanal (25) oder die Hülse (15, 15a-15l) oder das Rohr oder das Röhrchen einen Kunststoff und/oder ein Metall umfasst /oder aus einem Kunststoff oder einem Metall besteht, wobei der Kunststoff bevorzugt PPA oder PA oder PPS ist und/oder wobei das Metall bevorzugt Kupfer oder Aluminium ist.

7. Vorrichtung (100) nach einem der vorgenannten Ansprüche, **dadurch gekennzeichnet, dass** jedes Positionierungsmittel (14) zur Aufnahme von genau zwei elektrischen Leitern (17) ausgebildet ist.

8. Vorrichtung (100) nach einem der vorgenannten Ansprüche, **dadurch gekennzeichnet, dass** der Grundkörper (11), bevorzugt die Unterseite (12) des Grundkörpers (11), einen Vergusskanal (35) umfasst, wobei der Vergusskanal (35) ausgebildet ist, ein Vergussmaterial, bevorzugt ein Harz oder einen Kunststoff, aufzunehmen, wobei der Grundkörper (11) weiter bevorzugt eine Vergussmaterialeinfülleinrichtung (37), insbesondere einen Stutzen oder ein Vergussbecken (36), umfasst.

9. Stator (10) einer elektrischen Maschine mit einen Vorrichtung nach einem der vorgenannten Ansprüche.

10. Verfahren zur Verschaltung der Verdrahtung eines Stators (10) einer elektrischen Maschine mit einer Vorrichtung (100) nach einem der Ansprüche 1 bis 8 **gekennzeichnet durch** das Umfassen der Schritte
- Bereitstellen eines Stators (10) einer elektrischen Maschine,
- Aufsetzen des Grundkörpers (11) der Vorrichtung (100) mit der Unterseite (12) auf den Stator (10), sodass jeweils mindestens zwei elektrische Leiter (17) der Verdrahtung des Stators (10) durch die jeweiligen Einführöffnungen (26) der Positionierungsmittel (14) eingeführt und mittels der Führungsabschnitte (27) in die Verschaltungsabschnitte (16) geführt werden,
- Verschweißen der elektrischen Leiter (17) miteinander und/oder mit dem Verschaltungsabschnitt (16).

## Claims

1. Apparatus (100) for connecting the wiring arrangement of a stator (10) of an electrical machine, comprising a main body (11) with a bottom side (12), wherein the main body (11) can be placed on a stator (10) by way of the bottom side (12), wherein the main body (11) comprises at least six positioning means (14) for receiving and positioning in each case at least two electrical conductors (17) of a wiring arrangement of the stator (10), wherein each positioning means (14) has an insertion opening (26), wherein the insertion opening (26) is arranged on the bottom side (12) of the main body (11), so that the in each case at least two electrical conductors (17) can be inserted into the positioning means (14) through the insertion openings (26) when the apparatus is placed on the stator (10), wherein each positioning means (14) has a guide section (27) and a connecting section (16), wherein the connecting section (16) is a sleeve (15, 15a-151) or a subsection of a sleeve (15, 15a-151), wherein the positioning means (14) are designed in such a way that the in each case at least two electrical conductors (17) are guided into the connecting sections (16) by means of the guide sections (27) when the main body (11) is placed on the stator (10), wherein the main body (11) has at least three conductor tracks (29a-29d), wherein the at least three conductor tracks (29a-29d) each have a connection element (30) for connection to in each case one main phase of a three-phase alternating current source, wherein the connecting sections (16) of at least two positioning means (14) are electrically conductively connected to a first conductor track (29a), wherein the connecting sections (16) of at least two further positioning means (14) are electrically conductively connected to a second conductor track (29b), wherein the connecting sections (16) of at least two further positioning means (14) are electrically conductively connected to a third conductor track (29c), **characterized in that** the at least three conductor tracks (29a-29d) are each arranged in one of the planes (23a-23d) in the main body (11) that run parallel to the bottom side (12) of the main body (11).

2. Apparatus (100) according to Claim 1, **characterized in that** the main body (11) comprises at least twelve positioning means (14).

3. Apparatus (100) according to Claim 1 or 2, **characterized in that** the conductor tracks (29a-29d) consist of copper and/or aluminium.

4. Apparatus (100) according to one of the preceding claims, **characterized in that** four conductor tracks (29a-29d) are provided, wherein one of the four conductor tracks (29a-29d) is designed as a star point of the wiring arrangement of the stator (10).

5. Apparatus (100) according to Claim 4, **characterized in that** the at least four conductor tracks (29a-29d) are each arranged in one of the planes (23a-23d), in particular in the main body (11), that run parallel to the bottom side (12) of the main body (11).

6. Apparatus (100) according to one of the preceding claims, **characterized in that** the guide section (27) is a duct (25) or a sleeve (15, 15a-151) or a pipe or a tube, or **in that** the guide section (27) is a subsection of a duct (25) or of a sleeve (15, 15a-151) or of a pipe or of a tube, and/or **in that** the duct (25) or the sleeve (15, 15a-151) or the pipe or the tube comprises a plastic and/or a metal or consists of a plastic or a metal, wherein the plastic is preferably PPA or PA or PPS and/or wherein the metal is preferably copper or aluminium.

7. Apparatus (100) according to one of the preceding claims, **characterized in that** each positioning means (14) is designed for receiving precisely two electrical conductors (17).

8. Apparatus (100) according to one of the preceding claims, **characterized in that** the main body (11), preferably the bottom side (12) of the main body (11), comprises a potting duct (35), wherein the potting duct (35) is designed to receive a potting material, preferably a resin or a plastic, wherein the main body (11) further preferably comprises a potting material filling device (37), in particular a nozzle or a potting basin (36).

9. Stator (10) of an electrical machine, comprising an apparatus according to one of the preceding claims.

10. Method for connecting the wiring arrangement of a stator (10) of an electrical machine using an apparatus (100) according to one of Claims 1 to 8, **characterized by** comprising the steps of
- providing a stator (10) of an electrical machine,
- placing the main body (11) of the apparatus (100) on the stator (10) by way of the bottom side (12), so that in each case at least two electrical conductors (17) of the wiring arrangement of the stator (10) are inserted through the respective insertion openings (26) of the positioning means (14) and guided into the connecting sections (16) by means of the guide sections (27),
- welding the electrical conductors (17) to one another and/or to the connecting section (16).

## Revendications

1. Dispositif (100) de connexion du câblage d'un stator (10) d'une machine électrique, comportant un corps de base (11) doté d'un côté inférieur (12), le corps de base (11) pouvant être placé par le côté inférieur (12) sur un stator (10), le corps de base (11) comprenant au moins six moyens de positionnement (14) pour la réception et le positionnement de respectivement au moins deux conducteurs électriques (17) d'un câblage du stator (10), chaque moyen de positionnement (14) comprenant une ouverture d'insertion (26), l'ouverture d'insertion (26) étant disposée sur le côté inférieur (12) du corps de base (11), de telle sorte que les respectivement au moins deux conducteurs électriques (17) peuvent être insérés à travers les ouvertures d'insertion (26) dans les moyens de positionnement (14) lors du placement du dispositif sur le stator (10), chaque moyen de positionnement (14) comprenant une partie de guidage (27) et une partie de connexion (16), la partie de connexion (16) étant une douille (15, 15a-15l) ou une partie de douille (15, 15a-151), les moyens de positionnement (14) étant réalisés de telle sorte que les respectivement au moins deux conducteurs électriques (17) sont guidés dans les parties de connexion (16) au moyen des parties de guidage (27) lors du placement du corps de base (11) sur le stator (10), le corps de base (11) comprenant au moins trois tracés conducteurs (29a-29d), les au moins trois tracés conducteurs (29a-29d) comprenant chacun un élément de raccordement (30) servant au raccordement à une phase principale respective d'une source de courant alternatif triphasé, les parties de connexion (16) d'au moins deux moyens de positionnement (14) étant raccordées de manière électroconductrice à un premier tracé conducteur (29a), les parties de connexion (16) d'au moins deux autres moyens de positionnement (14) étant raccordées de manière électroconductrice à un deuxième tracé conducteur (29b), les parties de connexion (16) d'au moins deux autres moyens de positionnement (14) étant raccordées de manière électroconductrice à un troisième tracé conducteur (29c), **caractérisé en ce que** les au moins trois tracés conducteurs (29a-29d) sont disposés respectivement dans l'un des plans (23a-23d) s'étendant parallèlement au côté inférieur (12) du corps de base (11) dans le corps de base (11).

2. Dispositif (100) selon la revendication 1, **caractérisé en ce que** le corps de base (11) comporte au moins douze moyens de positionnement (14).

3. Dispositif (100) selon la revendication 1 ou 2, **caractérisé en ce que** les tracés conducteurs (29a-29d) sont constitués de cuivre et/ou d'aluminium.

4. Dispositif (100) selon l'une des revendications précédentes, **caractérisé en ce que** quatre tracés conducteurs (29a-29d) sont prévus, l'un des quatre tracés conducteurs (29a-29d) étant réalisé comme point neutre du câblage du stator (10).

5. Dispositif (100) selon la revendication 4, **caractérisé en ce que** les au moins quatre tracés conducteurs (29a-29d) sont disposés respectivement dans l'un des plans (23a-23d) s'étendant parallèlement au côté inférieur (12) du corps de base (11), en particulier dans le corps de base (11).

6. Dispositif (100) selon l'une des revendications précédentes, **caractérisé en ce que** la partie de guidage (27) est un canal (25) ou une douille (15, 15a-15l) ou un tuyau ou un tube, ou **en ce que** la partie de guidage (27) est une partie d'un canal (25) ou d'une douille (15, 15a-15l) ou d'un tuyau ou d'un tube, et/ou **en ce que** le canal (25) ou la douille (15, 15a-15l) ou le tuyau ou le tube comporte une matière synthétique et/ou un métal ou est constitué(e) d'une matière synthétique ou d'un métal, la matière synthétique étant de préférence du PPA ou du PA ou du PPS et/ou le métal étant de préférence du cuivre ou de l'aluminium.

7. Dispositif (100) selon l'une des revendications précédentes, **caractérisé en ce que** chaque moyen de positionnement (14) est réalisé pour la réception d'exactement deux conducteurs électriques (17).

8. Dispositif (100) selon l'une des revendications précédentes, **caractérisé en ce que** le corps de base (11), de préférence le côté inférieur (12) du corps de base (11), comporte un canal de scellement (35), le canal de scellement (35) étant réalisé pour recevoir une matière de scellement, de préférence une résine ou une matière synthétique, le corps de base (11) comportant de manière plus particulièrement préférée un dispositif de remplissage de matière de scellement (37), en particulier une tubulure ou un bac de scellement (36).

9. Stator (10) d'une machine électrique comportant un dispositif selon l'une des revendications précédentes.

10. Procédé de connexion du câblage d'un stator (10) d'une machine électrique à l'aide d'un dispositif (100) selon l'une des revendications 1 à 8, **caractérisé en ce qu'**il comprend les étapes suivantes
- fourniture d'un stator (10) d'une machine électrique,
- placement du corps de base (11) du dispositif (100) par le côté inférieur (12) sur le stator (10), de telle sorte que respectivement au moins deux conducteurs électriques (17) du câblage du stator (10) sont insérés à travers les ouvertures d'insertion (26) respectives des moyens de positionnement (14) et sont guidés dans les parties de connexion (16) au moyen des parties de guidage (27),
- soudage des conducteurs électriques (17) les uns avec les autres et/ou avec la partie de connexion (16).
